# FASCICULE DE BREVET EUROPEEN

(11) **EP 1 900 211 B1**
(45) Date de publication et mention de la délivrance du brevet: **18.11.2009**
(21) Numéro de dépôt: 06777630.2
(22) Date de dépôt: 06.07.2006
(51) Int. Cl.: H04N 7/167, H04N 5/00, G07F 7/10

(54) **METHODE ET DISPOSITIF DE CONTROLE D'ACCES A DES DONNEES CHIFFREES**
VERFAHREN UND EINRICHTUNG ZUR KONTROLLE DES ZUGANGS ZU VERSCHLÜSSELTEN DATEN
METHOD AND DEVICE FOR CONTROLLING ACCESS TO ENCRYPTED DATA

(30) Priorité: 07.07.2005 EP 05106185
(43) Date de publication de la demande: 19.03.2008
(73) Titulaire: Nagravision SA, 1033 Cheseaux-sur-Lausanne (CH)
(72) Inventeur: KUDELSKI, Henri, CH-1071 Chexbres (CH); COCHARD, Jimmy, CH-1616 Attalens (CH)
(74) Mandataire: Leman Consulting S.A.
(86) Numéro de dépôt international: PCT/EP2006/063988
(87) Numéro de publication internationale: WO 2007/006735

(56) Documents cités:
- EP-A- 0 866 613
- EP-A- 1 353 511
- EP-A- 1 441 525
- EP-A- 1 575 293
- WO-A-99/57901
- WO-A-03/069910
- US-A- 5 461 675
- US-A1- 2004 215 691
- FRANCIS ET AL: "Countermeasures for attacks on satellite TV cards using open receivers" AUSTRALASIAN INFORMATION SECURITY WORKSHOP.: DIGITAL RIGHTS MANAGEMENT, XX, XX, 6 novembre 2004 (2004-11-06), pages 1-6, XP002333719
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936 cité dans la demande
- "MCCORMAC HACK OVER CABLEMODEM" HACKWATCH.COM, 10 août 1998 (1998-08-10), XP002292343 cité dans la demande

## Description

### DOMAINE TECHNIQUE

La présente invention concerne une méthode et un dispositif de contrôle d'accès à des données chiffrées par des mots de contrôle, ces mots de contrôle étant reçus par un module de sécurité dans des messages de contrôle et retournés à une unité d'exploitation des données chiffrées.

La présente méthode de même que le dispositif s'appliquent en particulier dans le cas de la télévision à péage.

### TECHNIQUE ANTERIEURE

De façon bien connue, en particulier dans le domaine mentionné ci-dessus de la télévision à péage, des données sont chiffrées par un fournisseur de données au moyen de clés de chiffrement nommées mots de contrôle. Ces données sont transmises à des unités multimédia d'utilisateurs ou d'abonnés. Parallèlement à ceci, les mots de contrôle sont transmis à ces unités multimédia sous la forme d'un flux de messages de contrôle.

Les unités multimédia sont généralement formées d'une unité d'exploitation qui, dans le cas de la télévision à péage, est un décodeur recevant les flux mentionnés ci-dessus, et d'un module de sécurité en charge des opérations cryptographiques liées à l'utilisation de ces flux.

De façon bien connue de l'homme du métier, un tel module de sécurité peut être réalisé essentiellement selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Lorsqu'une unité multimédia a reçu le flux contenant les mots de contrôle, il est tout d'abord vérifié si l'utilisateur dispose des droits pour déchiffrer des données spécifiques. Si tel est le cas, les messages de contrôle sont déchiffrés de façon à en extraire les mots de contrôle. Ces mots de contrôle sont à leur tour utilisés pour déchiffrer les données.

Egalement de façon connue, chaque mot de contrôle permet généralement de déchiffrer une faible partie des données transmises. Typiquement, un mot de contrôle permet de déchiffrer 10 secondes d'un événement de télévision à péage. Après cette durée, appelée cryptopériode, le mot de contrôle est changé pour des raisons de sécurité.

Une manière possible de bénéficier de l'accès à des données chiffrées sans en être autorisé consiste à utiliser une véritable unité multimédia avec un vrai module de sécurité, mais de distribuer les mots de contrôle à un ensemble de décodeurs. Ceci peut se faire au moyen d'un serveur ou dispositif séparateur connu sous l'appellation de "splitter". Ainsi, les montants liés à l'acquisition de droits d'accès à des données chiffrées sont payés pour une seule unité multimédia alors que des événements peuvent être accessibles depuis plusieurs unités multimédia.

La demande de brevet européen EP 1 575 293 décrit une méthode destinée à éviter qu'un même module de sécurité soit partagé par plusieurs utilisateurs. Pour la mise en oeuvre de cette méthode, le module de sécurité dispose d'une mémoire destinée à mémoriser des séquences de messages de commande. Le module de sécurité dispose également de moyens pour analyser une séquence anormale de messages de commande, ces moyens agissant par comparaison des messages de commande mémorisés. Lorsqu'une séquence anormale est détectée, un compteur d'erreur est incrémenté. Un temps de retard dans le traitement des mots de contrôle est introduit en fonction de la valeur du compteur d'erreurs.

Dans la méthode décrite dans cette demande de brevet, un comportement anormal est défini sur la base de l'analyse des canaux utilisés. A titre d'exemple, si l'identifiant de canal est alternativement A puis B, les moyens d'analyse estiment qu'il s'agit d'une séquence anormale correspondant à un partage du module de sécurité. Le compteur d'erreurs est alors incrémenté. Au contraire, si l'identifiant de canal est A pendant plusieurs cryptopériodes, puis passe à B pour plusieurs cryptopériodes, cela ne sera pas considéré comme un comportement anormal et le compteur d'erreurs ne sera pas incrémenté.

L'invention décrite dans la demande de brevet US 2004/0215691 cherche à empêcher cet usage frauduleux. Pour réaliser ceci, chaque fois qu'un message de contrôle est reçu par une unité multimédia, cette unité ou le module de sécurité qui lui est associé détermine à quel canal est lié ce message de contrôle. Les identifiants des canaux sont mémorisés avec une information temporelle. Les messages sont comparés de façon à déterminer s'ils sont liés à des canaux différents ou au même canal. S'ils sont liés à des canaux différents, un compteur est incrémenté d'une certaine valeur. Si les messages de contrôle sont liés au même canal, le compteur est décrémenté. Si le compteur atteint une valeur de seuil prédéfinie, ce qui signifie que de nombreux changements de canaux sont intervenus, le déchiffrement des mots de contrôle est stoppé.

Les deux procédés décrits dans le document EP 1 575 293 et US 2004/0215691 impliquent qu'il est nécessaire d'avoir à disposition, un identifiant du canal concerné par chaque message de contrôle. Dans certaines configurations, ceci n'est pas le cas. En utilisant des messages de contrôle tels que définis en particulier dans la norme Eurocrypt N° EN 50094 de décembre 1992, il est possible d'identifier non pas chaque canal, mais une classe de canaux. Dans ce cas, il n'est pas possible, avec l'invention décrite ci-dessus, de bloquer l'utilisation de plusieurs unités multimédia qui utilisent un seul module de sécurité et un dispositif séparateur.

Le document "Countermeasures for Attacks on satellite TV cards using open receivers" XP-002333719 de Francis et al. décrit de façon très générale, différents moyens pour éviter une utilisation frauduleuse de modules de sécurité. Selon un aspect particulier, ce document suggère de vérifier que la marque temporelle d'un message est située dans le futur par rapport à la marque temporelle d'un message reçu précédemment. Ce document ne mentionne toutefois aucune solution concrète. En particulier, il n'y a aucune information permettant de faire une distinction entre une utilisation illégale d'un module de sécurité pour plusieurs utilisateurs et un changement de canal légal par un seul utilisateur.

### EXPOSE DE L'INVENTION

La présente invention se propose de réaliser une solution alternative à celle de l'art antérieur, dans laquelle on s'affranchit de l'utilisation d'un identifiant du canal tout en empêchant l'utilisation d'un dispositif séparateur permettant à plusieurs décodeurs d'accéder à un contenu chiffré à partir d'un seul module de sécurité. De plus, selon cette solution, un identifiant du canal concerné n'est pas nécessaire, de sorte que cette solution fonctionne également dans le cas où les messages de contrôle ne contiennent pas un tel identifiant de canal, mais où par exemple, les canaux sont groupés par classe.

Le but de l'invention est atteint par une méthode de contrôle d'accès à des données chiffrées par des mots de contrôle, ces mots de contrôle étant reçus par un module de sécurité dans des messages de contrôle et retournés à une unité d'exploitation des données chiffrées, cette méthode comprenant les étapes suivantes :
- réception d'un premier message de contrôle comprenant au moins un mot de contrôle et une marque temporelle,
- réception d'un second message de contrôle consécutif au premier message de contrôle, ce second message comprenant au moins un mot de contrôle et une marque temporelle,
- détermination d'une durée correspondant à la différence entre les marques temporelles des deux messages de contrôle consécutifs,
- si cette durée est inférieure à durée pré-définie, incrémentation d'un compteur d'erreurs,
- si cette durée est égale ou supérieure à ladite durée pré-définie, décrémentation dudit compteur d'erreurs.

Le but de l'invention est également atteint par un dispositif de contrôle d'accès à des données chiffrées par des mots de contrôle, ces mots de contrôle étant reçus par un module de sécurité dans des messages de contrôle et retournés à une unité d'exploitation des données chiffrées, ce dispositif comprenant :
- des moyens de réception d'un premier message de contrôle comprenant au moins un mot de contrôle,
- des moyens de réception d'un second message de contrôle consécutif au premier message de contrôle, ce second message comprenant au moins un mot de contrôle,
- des moyens pour déterminer une durée séparant les deux messages de contrôle consécutifs,
- des moyens pour incrémenter un compteur d'erreurs si cette durée est inférieure à durée pré-définie,
- et des moyens pour décrémenter ledit compteur d'erreurs si cette durée est égale ou supérieure à ladite durée pré-définie.
- et des moyens pour renvoyer le mot de contrôle (CW) à l'unité d'exploitation (STB) après un temps d'attente dépendant de la valeur du compteur d'erreurs (CE).

De façon générale, la méthode et le dispositif selon la présente invention permet de déterminer, d'après des informations temporelles liées aux messages de contrôle envoyés par un centre de gestion, si ces messages de contrôle sont envoyés et traités selon une utilisation conventionnelle ou frauduleuse. Le compteur d'erreurs permet de prendre des mesures dans le cas où une utilisation anormale est détectée. Ces mesures peuvent être de différentes natures, telles que l'interruption momentanée d'un service, le ralentissement du renvoi des mots de contrôle, voire le blocage du module de sécurité, auquel cas le déblocage peut se faire soit automatiquement soit sur demande auprès d'un service téléphonique. En cas d'utilisation conventionnelle, l'utilisateur ne perçoit aucun changement dû à l'utilisation de cette méthode. Par utilisation conventionnelle, on entend aussi bien l'accès à un contenu chiffré sur un canal déterminé qu'un changement de canal (zapping) à un rythme et pendant une durée "raisonnable". Par contre, en cas d'usage frauduleux d'un dispositif séparateur alimentant plusieurs décodeurs à partir d'un seul module de sécurité, l'accès au contenu chiffré devient rapidement impossible. Lorsque l'utilisation est de nouveau correcte, l'accès aux données peut de nouveau être autorisé.

### DESCRIPTION SOMMAIRE DES DESSINS

La présente invention et ses avantages seront mieux compris en référence aux figures annexées et à la description détaillée d'un mode de réalisation particulier donné à titre d'exemple non-limitatif, dans lesquelles :
- la figure 1 illustre un exemple de structure d'un message de contrôle tel qu'utilisé dans la présente invention;
- la figure 2 illustre une configuration dans laquelle deux décodeurs sont utilisés avec un seul module de sécurité et un dispositif séparateur,
- la figure 3 représente schématiquement un mode de réalisation du procédé de déchiffrement selon la présente invention;
- la figure 4 illustre la réception de messages de contrôle ECM en fonction du temps; et
- la figure 5 représente une valeur d'un compteur d'erreurs en fonction du temps et des messages de contrôle reçus tels qu'illustrés par la figure 4.
- la figure 6 illustre une variante de l'invention dans laquelle des cryptopériodes différentes sont utilisées sur des canaux différents.

### MANIERES DE REALISER L'INVENTION

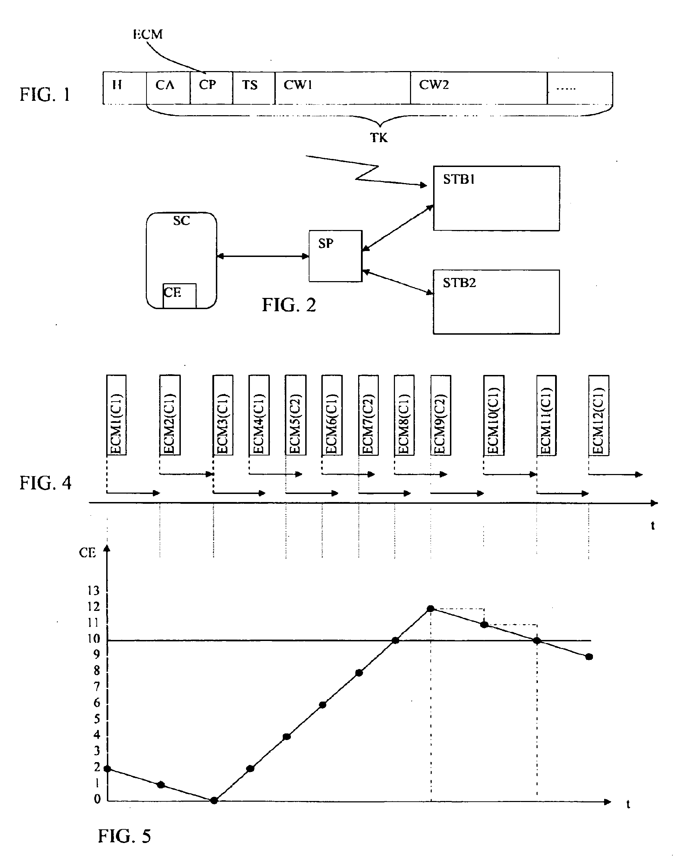

La figure 1 illustre de façon schématique, le contenu et la structure d'un message de contrôle ECM tel qu'utilisé dans la présente invention. Ce message de contrôle ECM contient des champs dans lesquels se trouvent notamment une marque temporelle (Time stamp) TS représentant une date et une heure, la durée de la cryptopériode CP, des conditions d'accès CA à un contenu audio/vidéo et deux mots de contrôle CW1, CW2, de parités différentes. Le message de contrôle peut en outre comporter d'autres champs non décrits en détail ici. Les données contenues dans les champs du message de contrôle sont généralement chiffrées par une clé de transmission TK. Ce message peut en outre comporter un ou des en-têtes qui ne sont pas nécessairement chiffrés. En particulier, un tel message comprend un en-tête H qui permet à l'unité multimédia de l'identifier comme un message de contrôle ECM et qui ne doit pas être chiffré. Il est à noter que la cryptopériode n'est pas nécessairement contenue dans un tel message de contrôle. En effet, si les cryptopériodes des différents canaux sont identiques et restent constantes pendant un certain temps, la cryptopériode peut être envoyée dans un message de gestion EMM.

Selon un premier mode de réalisation, la présente invention fonctionne de la manière générale suivante. De façon conventionnelle, un message de contrôle ECM est envoyé à une unité multimédia comprenant un décodeur STB et un module de sécurité SC. A réception de ce message de contrôle, les conditions d'accès CA requises pour accéder à un contenu déterminé, dénommé par la suite contenu audio/vidéo, sont extraites de ce message de contrôle par le module de sécurité. Ensuite, le module de sécurité vérifie s'il dispose des droits pour retourner le mot de contrôle. Si tel n'est pas le cas, il ne retourne pas le mot de contrôle. Si les droits de déchiffrement sont présents, le mot de contrôle est transmis au décodeur.

La valeur de la cryptopériode CP est également extraite du message de contrôle ou déterminée d'une autre manière. Cette valeur CP est mémorisée dans une mémoire liée au module de sécurité. Le mot de contrôle adéquat est renvoyé au décodeur, généralement sous une forme chiffrée par une clé de session. La clé de session est généralement dérivée d'une paire de clés asymétriques dont l'une des clés est mémorisée dans le module de sécurité et dont l'autre est mémorisée dans le décodeur. Les clés de cette paire de clés sont dénommées clés d'appariement et sont en principe uniques et différentes pour chaque unité multimédia. Le contenu chiffré peut alors être déchiffré par ce mot de contrôle et affiché sur un écran d'un utilisateur. Le mécanisme d'appariement est décrit de façon détaillée dans le brevet européen publié sous le N° EP 1 078 524.

Lorsqu'un message de contrôle ultérieur est reçu par l'unité multimédia, il est déchiffré de façon à en extraire entre autres, la marque temporelle TS.

Cette marque temporelle est comparée à la marque temporelle mémorisée lors du traitement du message de contrôle précédent. La différence entre ces deux marques temporelles est comparée à la cryptopériode également mémorisée lors du traitement du message de contrôle précédent. Si cette différence est inférieure à la valeur de la cryptopériode, ce qui signifie que l'unité multimédia a reçu plus d'un message par cryptopériode, une valeur d'un compteur est incrémentée. Ce compteur, dénommé compteur d'erreurs CE dans la suite de la description, est placé en principe dans le module de sécurité. L'incrémentation de ce compteur est ainsi effectuée lorsque le module de sécurité est appelé à retourner des mots de contrôle selon une fréquence plus grande que la cryptopériode, ceci soit par un changement de canal de l'utilisateur, soit par le fonctionnement de plus d'une unité multimédia sur le même module de sécurité.

La figure 2 représente une configuration contre laquelle la présente invention cherche à lutter. Dans cette configuration, deux dispositifs d'exploitation de données ou deux décodeurs STB1, STB2 sont alimentés en mots de contrôle par un seul module de sécurité et un dispositif séparateur. Dans cette configuration, lorsque l'un des décodeurs reçoit un message de contrôle ECM, il le transmet au dispositif séparateur SP qui le renvoie à son tour au module de sécurité SC. Celui-ci le déchiffre s'il y est autorisé, puis transmet le mot de contrôle à l'un ou l'autre des décodeurs STB1 ou STB2 par l'intermédiaire du dispositif séparateur SP.

Sur cette figure 2, seuls deux décodeurs sont représentés. En pratique, il est possible qu'un plus grand nombre de décodeurs soient alimentés en mots de contrôle par un seul module de sécurité et un dispositif séparateur.

Il est à noter que le procédé ne contrôle que des durées liées aux messages de contrôle ECM. Si d'autres types de messages, par exemple des messages de gestion EMM sont envoyés entre deux messages de contrôle, ces autres types de messages ne sont pas pris en considération et ne perturbent pas le fonctionnement du procédé.

### Utilisation des données du compteur d'erreurs

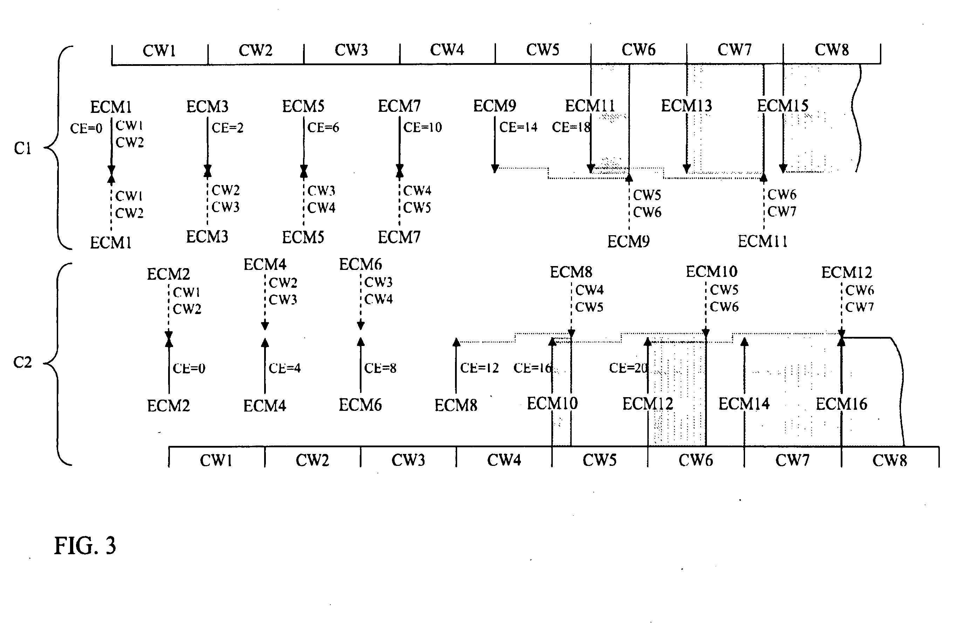

Un exemple de réalisation particulier est décrit ci-dessous en référence à la figure 3. Dans ce mode de réalisation, la valeur du compteur d'erreurs CE est utilisée pour introduire un temps de retard dans le renvoi des mots de contrôle CW extraits des messages de contrôle ECM. Dans l'exemple de cette figure 3, on prend comme hypothèse que la cryptopériode est de 10 secondes. A réception d'un premier message de contrôle ECM1, celui-ci est traité de façon à en extraire les mots de contrôle qu'il contient, notés respectivement CW1(C1) et CW2(C1). Il est à noter que sur la figure, la partie supérieure correspond au canal C1 et la partie inférieure correspond au canal C2. Afin de ne pas surcharger cette figure, le mot de contrôle CW1(C1) correspondant au canal C1 est simplement noté CW1. De même, le mot de contrôle CW1(C2) correspondant au canal C2 est également noté CW1 sur la figure. Du fait de leur emplacement sur la figure, la distinction entre ces deux mots de contrôle est évidente. Dans la description, l'identifiant du canal est indiqué entre parenthèses.

Le traitement du message de contrôle ECM1 dure généralement quelques dizaines de millisecondes. Pendant que l'un des mots de contrôle, par exemple le mot de contrôle CW1(C1) est utilisé, l'autre mot de contrôle CW2(C1) contenu dans le même message de contrôle ECM1 est mémorisé. Le message de contrôle correspondant au même canal contiendra en général, le mot de contrôle mémorisé lors du traitement du message précédent, ainsi qu'un mot de contrôle supplémentaire qui est prévu pour être utilisé lors de la cryptopériode suivante. De cette façon, chaque mot de contrôle est envoyé deux fois. Cette manière de faire présente l'avantage que les mots de contrôle autres que ceux reçus immédiatement après un changement de canal sont mémorisés avant leur utilisation, de sorte qu'ils sont immédiatement disponibles lorsque nécessaire.

Le compteur d'erreurs CE introduit un temps de retard dans le renvoi des mots de contrôle du module de sécurité au décodeur. Cela signifie qu'au lieu de traiter un message de contrôle ECM et de renvoyer les mots de contrôle dès que ceux-ci ont été extraits, leur envoi au décodeur est retardé d'une durée qui dépend de la valeur mémorisée dans ce compteur.

La figure 3 représente un exemple où un dispositif séparateur (splitter) est utilisé de façon illégale entre le module de sécurité et deux décodeurs STB1 et STB2. Dans le cas le plus simple où les cryptopériodes sont identiques et où les utilisateurs ne changent pas de canaux, avec la configuration décrite ci-dessus, deux messages de contrôle seront reçus pendant chaque cryptopériode. Ainsi, à chaque cryptopériode, la valeur du compteur d'erreurs CE sera incrémentée. Cette incrémentation peut se faire selon des valeurs prédéfinies, par exemple de deux unités. A titre d'exemple, imaginons que l'on introduise un temps de retard du traitement des messages de contrôle de 1 seconde par unité du compteur d'erreurs dès le moment où cette valeur dépasse un seuil de 10. Lorsque le compteur n'a pas encore atteint ce seuil de 10 ou est égal à 10, aucun temps de retard n'est introduit.

Si la valeur initiale du compteur est nulle (CE=0), à réception d'un premier message de contrôle ECM1 la valeur de la cryptopériode CP, par exemple 10 secondes, sera mémorisée. Les mots de contrôle CW1(C1) et CW2(C1) sont déchiffrés. Le mot de contrôle CW1(C1) est utilisé pour déchiffrer un contenu audio/vidéo et le mot de contrôle CW2(C1) est mémorisé pour un usage ultérieur. La marque temporelle TS = T0 est extraite du message de contrôle et mémorisée. Lorsque le message de contrôle suivant ECM2 est reçu par l'unité multimédia, celle-ci extrait la marque temporelle T1. Le deuxième message de contrôle ECM2 est traité de façon à extraire les mots de contrôle, à utiliser le premier d'entre eux CW1 (C2) et à mémoriser l'autre CW2(C2). Ensuite, la différence entre T0 et T1 est calculée et l'on obtient par exemple 6 secondes.

Cette valeur est comparée à la cryptopériode CP mémorisée qui est, dans notre exemple, de 10 secondes. Etant donné que la différence des marques temporelles T1-T0 est inférieure à la cryptopériode CP, la marque du compteur d'erreurs CE est incrémentée, dans notre exemple de 2 unités. Cette marque vaut donc 2.

A réception du message de contrôle suivant ECM3, correspondant au premier canal C1, la marque du compteur d'erreurs CE est vérifiée. Cette marque étant de 2 et donc inférieure à la valeur de seuil de 10 définie précédemment, aucun temps de retard n'est introduit. Le module de sécurité traite le message en extrayant tout d'abord la marque temporelle TS=T2. Comme la cryptopériode est de 10 secondes, il en résulte que T2-T0 = 10. Comme T1-T0=6 dans cet exemple, T2-T1 = 4 secondes. Cette valeur étant inférieure à la cryptopériode, la valeur du compteur d'erreur est incrémentée de deux unités et passe à 4. Les mots de contrôle CW2(C1) et CW3(C1) sont extraits du message. Pendant ce temps, le contenu audio/vidéo est déchiffré en utilisant le mot de contrôle CW2(C1) provenant du message de contrôle précédent.

A réception du message de contrôle suivant ECM4, le module de sécurité traite également le message et renvoie les mots de contrôle sans introduire de temps de retard. Pendant ce temps, le décodeur STB2 utilise le mot de contrôle CW2(C2) provenant du message précédent pour déchiffrer le contenu audio/vidéo.

La différence entre la marque temporelle de ce message et du précédent est de 6 secondes, donc inférieure à la cryptopériode. La valeur du compteur d'erreurs CE est incrémenté de deux unités et vaut donc 6. Les mots de contrôle CW2(C2) et CW3(C2) sont extraits du message. Lorsque le contenu audio/vidéo devra utiliser le mot de contrôle CW3(C2) pour pouvoir être déchiffré, ce mot de contrôle sera disponible puisqu'il a été déchiffré dans le message de contrôle reçu précédemment ECM4.

L'unité multimédia recevra ensuite un cinquième message de contrôle ECM5, contenant les mots de contrôle CW3(C1) et CW4(C1). Pendant ce temps, le mot de contrôle CW3(C1) pourra être déchiffré pour accéder au contenu audio/vidéo, du fait que ce mot de contrôle a déjà été envoyé dans le message de contrôle ECM3 précédent. Comme la différence entre la marque temporelle du message de contrôle ECM4 et du message ECM5 est inférieure à la cryptopériode, la marque du compteur d'erreurs est incrémenté de 2 unités et passe à 8.

De façon similaire, le message de contrôle suivant ECM6 contient les mots de contrôle CW3(C2) et CW4(C2) qui peuvent être utilisés pour le déchiffrement du contenu audio/vidéo. La marque temporelle contenue dans ce message implique que le compteur d'erreurs est incrémenté de 2 unités pour passer à 10.

Le message de contrôle ECM7 suivant contient les mots de contrôle CW4(C1) et CW5(C1). Comme le compteur d'erreurs contient la valeur 10 qui est égale à la valeur de seuil, mais non supérieure à cette valeur, le message ECM7 est traité de façon à renvoyer les mots de contrôle immédiatement. Cela signifie que le mot de contrôle CW5(C1) sera disponible au moment où il sera nécessaire pour le contenu audio/vidéo. Le compteur d'erreurs sera de nouveau incrémenté de 2 unités pour passer à 12, donc au-delà de la valeur de seuil.

Le message de contrôle suivant ECM8 contient les mots de contrôle CW4(C2) et CW5(C2). Ce message est traité immédiatement, mais les mots de contrôle qu'il contient ne seront renvoyés qu'après un temps d'attende de 12 secondes. Cela signifie qu'avec une cryptopériode de 10 secondes, les mots de contrôle sont renvoyés 2 secondes après la fin de la cryptopériode. Pendant ces deux secondes, le mot de contrôle qui est nécessaire pour accéder au contenu audio/vidéo est le mot CW5(C2). Or ce mot de contrôle n'est pas accessible avant d'avoir été renvoyé au décodeur. Il en résulte que pendant ces deux secondes, le contenu audio/vidéo n'est pas accessible. Ceci peut se traduire sur l'écran de l'utilisateur par une image brouillée ou un écran uniformément noir ou blanc par exemple.

Le procédé se poursuit ainsi en ajoutant 2 unités au compteur d'erreurs et par conséquent deux secondes au temps de renvoi des mots de contrôle. Ainsi, lors du traitement du message de contrôle suivant ECM9, le contenu audio/vidéo ne sera pas accessible pendant 4 secondes. Pour les messages consécutifs ECM10, ECM 11 et ECM12, le temps pendant lequel l'accès au contenu audio/vidéo n'est pas possible est respectivement 6 secondes, 8 secondes et 10 secondes. Comme on peut aisément le constater, dès lors que le temps de retard est égal à deux fois la cryptopériode, le contenu n'est plus accessible.

La marque temporelle TS telle que décrite ci-dessus peut avoir une "résolution" de l'ordre de la seconde, voire de quelques secondes, par exemple 4 secondes en pratique. Cela signifie que la différence entre deux valeurs de marques temporelles sera également exprimées en secondes et non en fraction de secondes.

Il est à noter que l'exemple décrit ci-dessus utilise un temps donné par les marques temporelles. Si l'unité multimédia, c'est-à-dire le module de sécurité et/ou le décodeur contiennent une horloge, il est bien entendu possible de calculer la différence entre deux temps fournis par l'horloge et non plus entre deux valeurs temporelles. Dans les deux cas, le principe de l'invention reste toutefois le même.

### Utilisation d'une mémoire tampon

Le système tel que décrit ci-dessus présente une limitation dans le cas où une mémoire tampon est utilisée pour mémoriser le contenu audio/vidéo, de façon à compenser le retard induit par le module de sécurité et le rendre ainsi inopérant.

L'une des manières pour rendre cette mémorisation inutile ou au moins peu efficace consiste à ne pas fixer de limite supérieure au retard induit par le compteur d'erreurs ou à fixer une limite très élevée. De cette façon, comme le compteur d'erreurs augmente de deux à chaque message de contrôle non conforme, il atteindra pratiquement toujours une valeur supérieure à deux fois la cryptopériode voire plus de façon à dépasser le décalage introduit par la mémoire tampon. Dès ce moment, la totalité du contenu audio/vidéo n'est plus accessible. Ceci peut toutefois présenter un inconvénient. En effet, si le compteur d'erreurs a atteint une valeur importante, il est nécessaire de patienter pendant une durée importante après l'arrêt du dispositif séparateur, pour faire décrémenter le compteur d'erreurs suffisamment pour que le système fonctionne de nouveau correctement.

Une autre manière pour rendre cette mémorisation inefficace consiste à ne pas renvoyer les mots de contrôle qui, en tenant compte du retard, devraient être envoyés pendant une période durant laquelle le contenu n'est plus chiffré par les mots de contrôle censé être envoyé par le module de sécurité. A titre d'exemple, le message de contrôle référencé ECM8 sur la figure 2 contient les mots de contrôle CW4(C2) et CW5(C2). Avec une valeur du compteur d'erreurs de 12, ces mots de contrôle devraient être renvoyés après la fin de la cryptopériode. Dans ce cas, ces mots de contrôle ne sont tout simplement pas renvoyés. Le mot de contrôle CW4(C2) étant contenu dans le message ECM6, le contenu audio/vidéo pourra être déchiffré jusqu'à la fin de la cryptopériode utilisant ce mots de contrôle. Dès le changement suivant, le contenu ne sera plus accessible. Le compteur d'erreurs continue toutefois d'être incrémenté puisque la fréquence d'envoi des messages de contrôle n'a pas été modifiée.

### Décrémentation du compteur

Dans le mode d'utilisation non-autorisé décrit précédemment, il est clair que si deux utilisateurs ont accès au même module de sécurité pour déchiffrer des données, ces données seront rapidement inaccessibles. Si l'un des utilisateurs arrête d'accéder au module de sécurité, il peut être prévu que l'utilisateur "légal" puisse avoir de nouveau accès à ce contenu. Pour ceci, la solution proposée consiste à décrémenter le compteur d'erreurs CE selon des règles préétablies.

Les figures 4 et 5 illustrent de façon schématique la décrémentation du compteur d'erreurs ainsi que son incrémentation en fonction de la cryptopériode CP et de la différence entre les marques temporelles de deux messages de contrôle ECM successifs. Selon une règle possible, chaque fois qu'un message de contrôle ECM est reçu de façon correcte, c'est-à-dire lorsque la différence entre la marque temporelle d'un message donné et du message précédent est égale à la cryptopériode, le compteur d'erreurs est décrémenté d'une unité.

A titre d'illustration, la figure 4 représente des messages de contrôle ECM reçus au cours du temps alors que la figure 5 illustre la valeur du compteur d'erreurs CE également en fonction du temps.

Il est à noter que dans cet exemple, la valeur initiale du compteur d'erreur n'est pas nulle, mais a été fixée à 2. Etant donné qu'aucun retard n'est introduit aussi longtemps que la valeur de seuil n'a pas été dépassée, cette valeur initiale non-nulle n'a pas d'effet négatif sur le déchiffrement. Par contre, elle aura pour effet que, en cas d'utilisation frauduleuse, la valeur de seuil à partir de laquelle un retard est introduit est plus vite atteinte.

Le renvoi des mots de contrôle contenus dans le premier message de contrôle n'est pas retardé puisque la valeur de seuil n'est pas atteinte. Le premier mot de contrôle permet d'accéder au contenu audio/vidéo. Le deuxième mot de contrôle est mémorisé par le décodeur. A la fin de la cryptopériode, un nouveau message de contrôle ECM2 est reçu par l'unité multimédia. En comparant la marque temporelle des deux messages avec la cryptopériode du premier message de contrôle ECM1, il apparaît que la cryptopériode est égale à la différence entre les deux marques temporelles contenues dans les messages de contrôle. A ce moment, la valeur du compteur d'erreurs CE est décrémentée selon la règle prédéfinie, ici, d'une unité. Il a donc la valeur 1.

Lorsque le message de contrôle suivant est reçu par l'unité multimédia, la marque du compteur d'erreurs est vérifiée. Celle-ci vaut 1. Aucun temps de retard n'est donc appliqué. Pendant ce temps, le mot de contrôle préalablement mémorisé provenant du message de contrôle précédent est utilisé pour accéder au contenu audio/vidéo. La valeur du compteur est décrémentée selon la règle pré-établie et prend maintenant une valeur nulle.

Dans l'exemple illustré, l'unité multimédia reçoit un nouveau message de contrôle ECM4 dont la différence entre la marque temporelle de ce message et du message précédent est inférieure à la cryptopériode. A ce moment, la valeur du compteur est incrémentée de 2 unités pour passer à 2. Cette incrémentation peut arriver pour deux raisons différentes. Selon l'une des raisons, l'utilisateur change de canal (zapping). Selon l'autre raison, un dispositif séparateur (splitter) est utilisé. Comme déjà expliqué en référence à la figure 3, la valeur du compteur augmente, par exemple de deux en deux.

Dans l'exemple des figures 4 et 5, la différence entre les marques temporelles de deux messages de contrôle ECM consécutifs est inférieure à la cryptopériode jusqu'au message de contrôle portant la référence ECM8. La valeur du compteur d'erreurs augmente de 2 en 2 jusqu'à atteindre la valeur 12. Comme indiqué en référence à la figure 3, lorsque cette valeur de compteur CE dépasse 10, un temps de retard dans le renvoi des mots de contrôle est introduit. Ainsi, l'utilisateur n'aura pas accès à la totalité du contenu audio/vidéo. Sur les figures 4 et 5, lors de la réception des messages de contrôle ECM9 à ECM12, la différence entre les marques temporelles est égale à la cryptopériode et la valeur du compteur d'erreurs CE est donc décrémentée de 1 à chaque message. Dès que cette valeur de compteur atteint 10, le temps de retard dans le traitement est annulé et la totalité du contenu audio/vidéo est accessible à l'utilisateur.

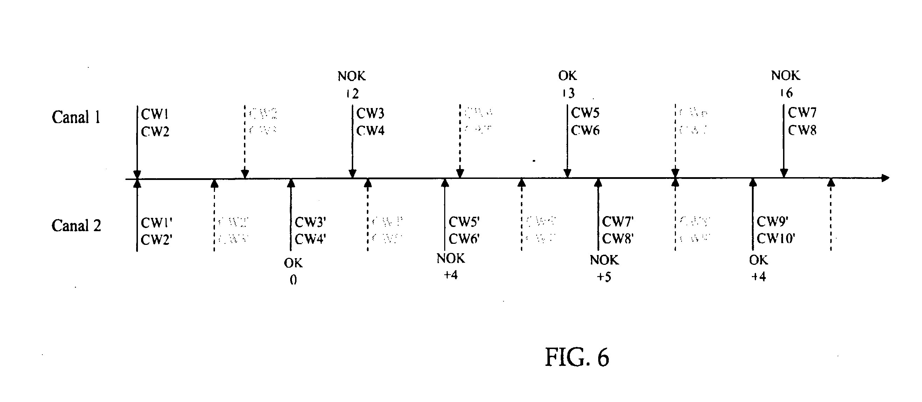

La figure 6 illustre un mode de réalisation particulier de l'invention selon lequel les cryptopériodes sont différentes d'un canal à l'autre. Dans cette figure, il est également supposé que le dispositif de l'invention est utilisé de manière frauduleuse pour alimenter deux décodeurs à partir d'un seul module de sécurité et qu'en outre, chaque canal ne reçoit qu'un message de contrôle sur deux. Cette utilisation d'un message de contrôle sur deux est possible du fait que chacun de ces messages contient deux mots de contrôle. Ainsi, même dans ce cas, tous les mots de contrôle seront disponibles pour les deux canaux.

A titre d'exemple, il est supposé que la cryptopériode du canal 1, représenté dans la partie supérieure de la figure 6, est de 7 secondes. La cryptopériode du canal 2, représenté dans la partie inférieure de la figure, est de 5 secondes. Prenons le cas où les premiers messages de contrôle de chaque canal C1 et C2 sont reçus simultanément. Le premier message de contrôle ECM1 (C1) du canal 1 contient une indication selon laquelle la cryptopériode est de 7 secondes. Ce message contient les mots de contrôle CW1(C1) et CW2(C1).

Le premier message de contrôle du canal 2 contient un valeur de cryptopériode de 5 secondes ainsi que les mots de contrôle CW'1(C2) et CW'2(C2).

Dans l'exemple représenté sur cette figure 6, les messages de contrôle suivants de chaque canal ne sont pas utilisés. Le prochain message à être utilisé est le message de contrôle référence ECM2(C2). Ce message est reçu deux cryptopériodes après le premier message ECM1 (C2) de sorte qu'il est considéré comme valide. La valeur du compteur d'erreurs est donc maintenue à une valeur nulle ou éventuellement décrémentée.

Le message suivant reçu par le module de sécurité est référencé par ECM2(C1). Il est reçu deux cryptopériodes après le premier message ECM1(C1), soit après 14 secondes dans notre exemple. Cela signifie qu'il est reçu également 4 secondes après le message ECM2(C2) correspondant au canal C2. Cette valeur de 4 secondes est inférieure à la cryptopériode contenue dans le message de contrôle précédent. La valeur du compteur d'erreurs est donc incrémentée de 2 unités, si l'on applique la même règle que dans l'exemple précédent. Cette valeur du compteur d'erreurs CE est donc de 2.

Le message suivant sera reçu après 4 cryptopériodes du canal C2, c'est-à-dire (4x5)-(2x7) = 6 secondes après le dernier message reçu ECM2(C1). Comme ce message contenait la valeur 7 secondes pour la cryptopériode, le message ECM3(C2) est considéré comme incorrect et la valeur du compteur d'erreurs est incrémenté de 2. Il atteint donc la valeur de 4.

Le message suivant ECM3(C1) est reçu après (4x7)-(4x5) = 8 secondes. Le message précédent contenait la valeur de la cryptopériode correspondant à celle du canal C2, à savoir 5 secondes. La durée de 8 secondes entre le message précédent est supérieure à cette valeur de 5 secondes. Le message est donc considéré comme correct. La valeur du compteur d'erreurs CE sera donc décrémentée d'une unité. En poursuivant le procédé de la manière décrite ci-dessus, on peut montrer que le compteur d'erreurs sera incrémenté puis décrémenté alternativement. Comme l'incrémentation se fait par sauts de deux unités et que la décrémentation se fait par sauts d'une unité, cette valeur de compteur augmentera dans le cas d'une utilisation frauduleuse telle que représentée par la figure 6. Ce compteur prendra les valeurs 0, 2, 4, 3, 5, 4, 6 ,5 ,7,... jusqu'à ce qu'il dépasse la valeur de seuil à partir de laquelle un retard dans le renvoi des mots de contrôle est généré.

Il est à noter que le cas où les utilisateurs ne déchiffrent qu'un message de contrôle sur deux, comme décrit en référence à la figure 6, représente le cas le plus défavorable en matière de détection d'utilisation frauduleuse. On peut facilement observer que dans le cas où les utilisateurs frauduleux déchiffrent tous les messages de contrôle ECM, la valeur du compteur d'erreurs augmentera plus rapidement et le renvoi des mots de contrôle par le module de sécurité sera d'autant plus vite retardé.

### Module de sécurité et décodeurs appariés

La suite de la description s'applique plus particulièrement, mais pas exclusivement, au cas où le module de sécurité et le décodeur formant une unité multimédia sont appariés. Dans ce cas, ils contiennent chacun une clé d'une paire de clés asymétriques, cette paire étant unique et différente pour chaque ensemble module de sécurité/décodeur. Dans cette configuration, lorsqu'une unité multimédia est enclenchée, une clé de session, généralement symétrique, est négociée entre le module de sécurité et le décodeur. Cette clé de session est utilisée pour chiffrer les mots de contrôle CW qui ont été déchiffrés par le module de sécurité, avant de les envoyer au décodeur. L'utilisation d'une telle clé de session pose un problème aux utilisateurs frauduleux qui exploitent un dispositif de séparation. En effet, comme la clé de session entre la paire module de sécurité/décodeur 1 est différente de la clé de session entre la paire module de sécurité/décodeur 2, il est nécessaire de négocier une clé de sessions à chaque réception d'un message de contrôle ECM sur un canal différent. Dans le cas illustré par la figure 3 où les messages de contrôle sont reçus alternativement sur un canal C1 et un autre canal C2, selon certaines configurations d'unités multimédia, une clé de session doit être négociée entre chaque réception de message de contrôle ECM.

Pour générer la négociation d'une telle clé de session, il faut réinitialiser le module de sécurité. Ceci se fait en envoyant une commande de remise à zéro (reset) à l'unité multimédia. Une telle commande peut donc être envoyée entre chaque message de contrôle ECM. Dans ce cas, il est important que la valeur du compteur d'erreurs CE ne soit pas remise à zéro. Il est également souhaitable que cette valeur de compteur augmente en cas de remise à zéro correspond à un usage frauduleux.

Pour réaliser ceci, le module de sécurité mémorise dans une mémoire volatile, la date la plus récente qu'il ait reçu. Cette date est envoyée par exemple par un centre de gestion sous la forme d'un message de contrôle. A réception d'une commande de remise à zéro, cette date est mémorisée dans une mémoire non-volatile.

Parallèlement à ceci, comme déjà indiqué, les messages de contrôle ECM contiennent une marque temporelle TS. L'unité multimédia ou plus précisément le module de sécurité mémorise également une durée dénommée "temps de latence" qui est en principe supérieure ou égale à une cryptopériode.

A réception de chaque message de contrôle ECM, le module de sécurité calcule la différence entre la marque temporelle TS de ce message ECM et la date la plus récente reçue avant la dernière remise à zéro, mémorisée précédemment dans la mémoire non-volatile. Si cette différence est supérieure au temps de latence, le compteur d'erreurs peut être mis à zéro ou à une valeur pour laquelle il n'y a pas de retard dans le renvoi des mots de contrôle. Si cette différence est inférieure au temps de latence, cela signifie que le module de sécurité a déchiffré un message de contrôle peu de temps avant la remise à zéro, ce qui peut correspondre à une configuration dans laquelle un dispositif séparateur est utilisé. Le compteur d'erreurs est incrémenté selon une règle prédéfinie, par exemple de 3 unités.

Selon une première forme de réalisation, dès lors qu'un message de contrôle a été traité "peu de temps" avant la remise à zéro ou la dernière date mémorisée, c'est-à-dire dans une durée inférieure au temps de latence, un temps de retard est introduit. Ceci évite la mémorisation de la valeur du compteur d'erreurs en mémoire non-volatile. Par contre, en cas de remise à zéro "légale" pour des raisons techniques, l'utilisateur honnête devra attendre que le temps de retard soit écoulé avant de pouvoir accéder au contenu audio/vidéo. Si de plus, il change de canal pendant ce temps, la valeur du compteur augmentera.

Selon une autre forme de réalisation, la valeur du compteur d'erreurs est stockée de telle façon qu'une commande de remise à zéro n'entraîne pas une remise à zéro du compteur d'erreurs. Au contraire, cette valeur est conservée telle qu'avant la mise à zéro. De cette manière, une commande de remise à zéro entre chaque message de contrôle ECM aura rapidement pour effet d'empêcher l'accès au contenu audio/vidéo. Par contre, une remise à zéro occasionnelle n'empêchera pas l'accès au contenu audio/vidéo pour autant qu'un nombre suffisant de messages de contrôle ait été traité correctement entre deux remises à zéro consécutives. Pour empêcher tout effet cumulatif dans des circonstances normales, si le temps entre le premier traitement d'un message de contrôle (après la remise à zéro) et le temps du dernier traitement précédant la remise à zéro est suffisamment long (par exemple plusieurs heures) le compteur d'erreurs sera remis à zéro. Le temps nécessaire pour qu'une remise à zéro du compteur soit effectuée peut être défini par avance et est nommé temps d'inactivité.

Il est à noter qu'il existe des modules de sécurité dits multi-sesions qui sont capables de mémoriser plusieurs clés de session. Dans les cas d'utilisations normales, chaque clé de session est prévue pour le dialogue avec une unité multimédia, voire un sous ensemble de déchiffrement de contenu qui serait placé dans le même appareil.

Lors de l'accès au module de sécurité par l'un des ensembles de déchiffrement, celui-ci va ajouter une référence d'identification. Le module de sécurité va traiter ce message dans un environnement propre à cet ensemble et qui comprend les clés de sessions (si un appariement est actif), les autres données d'identification (droits, crédit) et les données permettant la détection d'usage frauduleux tel que décrit plus haut. Il s'agit en particulier du compteur d'erreurs, de la marque temporelle du dernier traitement d'un message de contrôle et de la valeur de la cryptopériode.

Ainsi, un même module de sécurité pourra traiter plusieurs ensembles de déchiffrement tout en vérifiant que le nombre total de décodeurs associés à ce module ne dépasse pas la limite fixée. Cette limite peut être programmée en fonction du profil de l'utilisateur.

### Incrémentation/décrémentation à des vitesses différentes

Dans les exemples indiqués, la valeur du compteur est incrémentée plus vite qu'elle n'est décrémentée. Elle augmente par exemple de deux unités lorsque la différence entre la marque temporelle de deux messages de contrôle successifs est inférieure à la cryptopériode. Elle augmente de trois unités à chaque remise à zéro considérée comme incorrecte alors qu'elle ne décroît que d'une unité à chaque réception correcte. Ceci permet d'éviter des cas particuliers dans lesquels, en jouant sur les remises à zéro et le traitement correct de messages de contrôle, il est possible de maintenir la valeur du compteur d'erreurs dans une plage dans laquelle l'accès au contenu audio/vidéo est toujours ou pratiquement toujours possible par des utilisateurs frauduleux.

Selon une autre variante, il est possible de prévoir que la décrémentation se fait plus vite que l'incrémentation.

### Durée de retard par paliers

Comme indiqué précédemment, il est en général prévu d'introduire un retard lorsque la valeur du compteur d'erreurs atteint un certain seuil. Au-delà de ce seuil, le retard peut être proportionnel au contenu du compteur ou augmenter par paliers ou être fixe. Généralement, ce retard est prévu pour qu'il empêche l'accès à une partie du contenu audio/vidéo pendant un certain temps d'usage frauduleux, puis à la totalité du contenu audio/vidéo après un temps d'usage frauduleux plus important.

Dans les exemples décrits précédemment, il est indiqué que la durée de la cryptopériode d'un message de contrôle est extraite de même que sa marque temporelle et qu'il est ensuite vérifié lors de la réception du message suivant, si la différence entre la marque temporelle de ce message et du précédent est égale ou inférieure à la cryptopériode. Cela implique qu'il faut mémoriser la cryptopériode et la marque temporelle du premier message.

Selon une variante, il est possible de calculer la différence entre les marques temporelles de deux messages de contrôle consécutifs ECM1 et ECM2 et de vérifier si cette différence est inférieure ou égale à la cryptopériode extraite du deuxième message reçu ECM2. Ceci a pour avantage de ne pas nécessiter la mémorisation de la cryptopériode et permet donc une économie de mémoire.

Dans les exemples décrits, la valeur du compteur d'erreurs peut être comprise entre 0 et une valeur de seuil, par exemple 10 ou être supérieure à cette valeur de seuil. Entre 0 et le seuil, il n'y a pas de temps de retard. Au-delà du seuil, un retard est introduit. Il est clair qu'il est possible de limiter la valeur maximale du compteur, ce qui permet également de limiter le nombre de messages consécutifs corrects qu'il faut déchiffrer pour pouvoir de nouveau passer sous la valeur du seuil.

Selon une variante, il est possible d'inverser le sens du compteur, ce qui signifie qu'a chaque déchiffrement correct, le compteur est incrémenté alors qu'il est décrémenté lors d'un déchiffrement frauduleux. Dans ce cas, un temps de retard est introduit lorsque le compteur contient une valeur comprise entre 0 et un seuil alors qu'aucun temps de retard n'est introduit si la valeur du compteur est au-delà de ce seuil.

Les exemples décrits mentionnent l'utilisation de deux décodeurs pour un module de sécurité. Il est bien entendu possible, pour un usage frauduleux, de relier plus de deux décodeurs à un module de sécurité par l'intermédiaire d'un dispositif séparateur. Selon le procédé de l'invention, ceci aura pour effet de bloquer encore plus rapidement l'accès au contenu audio/vidéo puisque le compteur d'erreurs sera incrémenté encore plus rapidement.

## Revendications

1. Méthode de contrôle d'accès à des données chiffrées par des mots de contrôle (CW), ces mots de contrôle étant reçus par un module de sécurité dans des messages de contrôle (ECM) et retournés à une unité d'exploitation (STB) des données chiffrées, cette méthode comprenant les étapes suivantes :
- réception d'un premier message de contrôle (ECM1) comprenant au moins un mot de contrôle (CW) et une marque temporelle (TS),
- réception d'un second message de contrôle (ECM2) consécutif au premier message de contrôle (ECM1), ce second message comprenant au moins un mot de contrôle (CW) et une marque temporelle (TS),
- détermination d'une durée correspondant à la différence entre les marques temporelles (TS) des deux messages de contrôle consécutifs (ECM1, ECM2),
- si cette durée est inférieure à durée pré-définie (CP), incrémentation d'un compteur d'erreurs (CE),
- si cette durée est égale ou supérieure à ladite durée pré-définie, décrémentation dudit compteur d'erreurs (CE),
- renvoi du mot de contrôle (CW) à l'unité d'exploitation (STB) après un temps d'attente dépendant de la valeur du compteur d'erreurs (CE).

2. Méthode de contrôle d'accès selon la revendication 1, **caractérisée en ce que** la valeur de ladite durée pré-définie est contenue dans au moins l'un des messages de contrôle (ECM1, ECM2).

3. Méthode de contrôle d'accès selon la revendication 1, **caractérisée en ce que** la valeur de ladite durée pré-définie est contenue dans un message de gestion (EMM).

4. Méthode de contrôle d'accès selon la revendication 3, **caractérisée en ce que** la valeur de ladite durée pré-définie est commune à une pluralité de services sur lesquels sont diffusées les données chiffrées.

5. Méthode de contrôle d'accès selon la revendication 1 ou 2, **caractérisée en ce que** la valeur de ladite durée pré-définie est égale à une durée pendant laquelle les données sont chiffrées avec le même mot de contrôle (CW).

6. Méthode de contrôle d'accès selon l'une quelconque des revendications 1 à 5,
**caractérisée en ce que** ledit premier message de contrôle (ECM1) comprend une valeur temporelle (TS), **en ce que** ledit second message de contrôle (ECM2) comprend une valeur temporelle (TS), et **en ce que** la durée séparant les deux messages de contrôle consécutifs correspond à la différence entre les marques temporelles (TS) de ces deux messages de contrôle.

7. Méthode de contrôle d'accès selon l'une quelconque des revendications 1 à 5, **caractérisée en ce que** le module de sécurité et/ou l'unité d'exploitation contiennent une horloge et **en ce que** la durée séparant les deux messages de contrôle consécutifs correspond à la différence entre l'instant de réception dudit premier message de contrôle (ECM1) et l'instant de réception dudit second message de contrôle (ECM2), ces instants étant déterminés par ladite horloge.

8. Méthode de contrôle d'accès selon la revendication 1, **caractérisée en ce que** le temps d'attente est nul lorsque la valeur du compteur d'erreurs (CE) est inférieure à un seuil prédéfini.

9. Méthode de contrôle d'accès selon la revendication 1, **caractérisée en ce que** l'incrémentation de la valeur du compteur d'erreurs (CE) est réalisée selon une règle prédéfinie.

10. Méthode de contrôle d'accès selon la revendication 1, **caractérisée en ce que** la décrémentation de la valeur du compteur d'erreurs (CE) est réalisée selon une règle prédéfinie.

11. Méthode de contrôle d'accès selon les revendications 9 et 10, **caractérisée en ce que** la règle prédéfinie pour l'incrémentation de la valeur du compteur d'erreurs (CE) et celle pour la décrémentation de ce compteur d'erreurs (CE) sont différentes l'une de l'autre.

12. Méthode de contrôle d'accès selon la revendication 11, **caractérisée en ce que** l'incrémentation de la valeur du compteur d'erreurs (CE) est plus rapide que la décrémentation.

13. Méthode de contrôle d'accès selon la revendication 1, **caractérisée en ce que,** lorsque ledit module de sécurité a été réinitialisé, cette méthode comprend en outre les étapes suivantes :
- détermination d'une date correspondant à la dernière date reçue par l'unité multimédia,
- détermination de la date de réception d'un nouveau message de contrôle (ECM),
- calcul de la différence entre ces deux dates,
- si cette différence est inférieure à un temps de latence prédéfini, incrémentation de la valeur du compteur d'erreurs (CE).

14. Méthode de contrôle d'accès selon la revendication 13, **caractérisée en ce que**, si la différence entre les deux dates est supérieure à un temps d'inactivité prédéfini, le compteur d'erreurs (CE) est réinitialisé.

15. Dispositif de contrôle d'accès à des données chiffrées par des mots de contrôle (CW), ces mots de contrôle étant reçus par un module de sécurité dans des messages de contrôle (ECM) et retournés à une unité d'exploitation (STB) des données chiffrées, ce dispositif comprenant:
- des moyens de réception d'un premier message de contrôle (ECM1) comprenant au moins un mot de contrôle (CW),
- des moyens de réception d'un second message de contrôle (ECM2) consécutif au premier message de contrôle (ECM1), ce second message comprenant au moins un mot de contrôle (CW),
- des moyens pour déterminer une durée séparant les deux messages de contrôle consécutifs (ECM1, ECM2),
- des moyens pour incrémenter un compteur d'erreurs (CE) si cette durée est inférieure à durée pré-définie (CP),
- des moyens pour décrémenter ledit compteur d'erreurs (CE) si cette durée est égale ou supérieure à ladite durée pré-définie.
- et des moyens pour renvoyer le mot de contrôle (CW) à l'unité d'exploitation (STB) après un temps d'attente dépendant de la valeur du compteur d'erreurs (CE).

## Claims

1. Method for controlling access to data encrypted by control words (CW), these control words being received by a security module in control messages (ECM) and returned to a user unit (STB) for encrypted data, this method comprising the following steps:
- reception of a first control message (ECM1) comprising at least one control word (CW) and a time stamp (TS),
- reception of a second control message (ECM2) consecutive to the first control message (ECM1), this second message comprising at least one control word (CW) and a time stamp (TS),
- determination of a duration corresponding to the difference between the time stamps (TS) of the two consecutive control messages (ECM1, ECM2),
- if this duration is lower than a predefined duration (CP), incrementation of an error counter (CE),
- if this duration is equal to or greater than said predefined duration, decrementation of said error counter (CE),
- returning of the control word (CW) to the user unit (STB) after a waiting time that depends on the value of the error counter (CE).

2. Method for controlling access according to claim 1, **characterised in that** the value of said predefined duration is contained in at least one of the control messages (ECM1, ECM2).

3. Method for controlling access according to claim 1, **characterised in that** the value of said predefined duration is contained in an entitlement management message (EMM).

4. Method for controlling access according to claim 3, **characterised in that** the value of said predefined duration is common to a plurality of services on which the encrypted data is broadcast.

5. Method for controlling access according to claim 1 or 2, **characterised in that** the value of said predefined duration is equal to a duration during which the data is encrypted with the same control word (CW).

6. Method for controlling access according to any of claims 1 to 5, **characterised in that** said first control message (ECM1) includes a time stamp (TS), **in that** said second control message (ECM2) includes a time stamp (TS), and **in that** the duration separating the two consecutive control messages corresponds to the difference between the time stamps (TS) of these two control messages.

7. Method for controlling access according to any of claims 1 to 5, **characterised in that** the security module and/or the user unit contain a clock and **in that** the duration separating the two consecutives control messages corresponds to the difference between the moment of the reception of said first control message (ECM1) and the moment of the reception of said second control message (ECM2), these moments being determined by said clock.

8. Method for controlling access according to claim 1, **characterised in that** the waiting time is zero when the value of the error counter (CE) is lower than a predefined threshold.

9. Method for controlling access according to claim 1, **characterised in that** the incrementation of the value of the error counter (CE) is carried out according to a preset rule.

10. Method for controlling access according to claim 1, **characterised in that** the decrementation of the value of the error counter (CE) is carried out according to a preset rule.

11. Method for controlling access according to claims 9 and 10, **characterised in that** the preset rule for the incrementation of the value of the error counter (CE) and that for the decrementation of this error counter (CE) are different.

12. Method for controlling access according to claim 11, **characterised in that** the incrementation of the value of the error counter (CE) is faster than decrementation.

13. Method for controlling access according to claim 1, **characterised in that,** when said security module has been restarted, this method furthermore includes the following steps:
- determination of a date corresponding to the last date received by the multimedia unit,
- determination of the reception date of a new control message (ECM),
- calculation of the difference between these two dates,
- if this difference is lower than a predefined latency time, incrementation of the value of the error counter (CE).

14. Method for controlling access according to claim 13, **characterised in that,** if the difference between the two dates is greater than a predefined idle time, the error counter (CE) is restarted.

15. Device for controlling access to data encrypted by control words (CW), these control words being received by a security module in control messages (ECM) and returned to a user unit (STB) for encrypted data, this device comprising:
- reception means of a first control message (ECM1) comprising at least one control word (CW),
- reception means of a second control message (ECM2) consecutive to the first control message (ECM1), this second message comprising at least one control word (CW),
- means to determine a duration separating the two consecutive control messages (ECM1, ECM2),
- means to increment an error counter (CE) if this duration is lower than a predefined duration (CP),
- means to decrement said error counter (CE) if this duration is equal to or greater than said predefined duration,
- and means to return the control word (CW) to the user unit (STB) after a waiting time depending on the value of the error counter (CE).

## Patentansprüche

1. Verfahren zur Kontrolle des Zugangs zu durch Kontrollwörter (CW) verschlüsselten Daten, wobei diese Kontrollwörter durch ein Sicherheitsmodul in Kontrollnachrichten (ECM) empfangen und an eine Auswerteeinheit (STB) der verschlüsselten Daten zurückgesendet werden, wobei das Verfahren folgende Schritte aufweist:
- Empfang einer ersten Kontrollnachricht (ECM1) mit wenigstens einem Kontrollwort (CW) und einer zeitlichen Markierung (TS),
- Empfang einer auf die erste Kontrollnachricht (ECM1) folgenden zweiten Kontrollnachricht (ECM2), wobei die zweite Nachricht wenigstens ein Kontrollwort (CW) und eine zeitliche Markierung (TS) aufweist,
- Feststellen einer Zeitdauer, die der Differenz zwischen den zeitlichen Markierungen (TS) der zwei aufeinander folgenden Kontrollnachrichten (ECM1, ECM2) entspricht,
- Hochzählen eines Fehlerzählers (CE), wenn diese Zeitdauer kürzer als die vorbestimmte Zeitdauer (CP) ist,
- Herunterzählen des Fehlerzählers (CE), wenn diese Zeitdauer gleich der vorbestimmten Zeitdauer oder länger als diese ist,
- Zurücksenden des Kontrollworts (CW) an die Auswerteeinheit (STB) nach einer Wartezeit, die von dem Wert des Fehlerzählers (CE) abhängt.

2. Verfahren zur Kontrolle des Zugangs nach Anspruch 1, **dadurch gekennzeichnet, dass** der Wert der vorbestimmten Zeitdauer in wenigstens einer der Kontrollnachrichten (ECM1, ECM2) enthalten ist.

3. Verfahren zur Kontrolle des Zugangs nach Anspruch 1, **dadurch gekennzeichnet, dass** der Wert der vorbestimmten Zeitdauer in einer Verwaltungsnachricht (EMM) enthalten ist.

4. Verfahren zur Kontrolle des Zugangs nach Anspruch 3, **dadurch gekennzeichnet, dass** der Wert der vorbestimmten Zeitdauer einer Vielzahl von Diensten gemeinsam ist, auf denen die verschlüsselten Daten gesendet werden.

5. Verfahren zur Kontrolle des Zugangs nach Anspruch 1 oder 2, **dadurch gekennzeichnet, dass** der Wert der vorbestimmten Zeitdauer gleich mit einer Zeitdauer ist, während der die Daten mit demselben Kontrollwort (CW) verschlüsselt sind.

6. Verfahren zur Kontrolle des Zugangs nach einem der Ansprüche 1 bis 5, **dadurch gekennzeichnet, dass** die erste Kontrollnachricht (ECM1) einen zeitlichen Wert (TS) aufweist, dass die zweite Kontrollnachricht (ECM2) einen zeitlichen Wert (TS) aufweist und dass die Zeitdauer, die die zwei aufeinander folgenden Kontrollnachrichten trennt, der Differenz zwischen den zeitlichen Markierungen (TS) dieser beiden Kontrollnachrichten entspricht.

7. Verfahren zur Kontrolle des Zugangs nach einem der Ansprüche 1 bis 5, **dadurch gekennzeichnet, dass** das Sicherheitsmodul und/oder die Auswerteeinheit eine Uhr aufweisen und dass die Zeitdauer, die die zwei aufeinander folgenden Kontrollnachrichten trennt, der Differenz zwischen dem Zeitpunkt des Empfangs der ersten Kontrollnachricht (ECM1) und dem Zeitpunkt des Empfangs der zweiten Kontrollnachricht (ECM2) entspricht, wobei diese Zeitpunkte durch die Uhr bestimmt werden.

8. Verfahren zur Kontrolle des Zugangs nach Anspruch 1, **dadurch gekennzeichnet, dass** die Wartezeit null ist, wenn der Wert des Fehlerzählers (CE) unterhalb einer vorbestimmten Schwelle liegt.

9. Verfahren zur Kontrolle des Zugangs nach Anspruch 1, **dadurch gekennzeichnet, dass** das Hochzählen des Werts des Fehlerzählers (CE) gemäß einer vorbestimmten Regel erfolgt.

10. Verfahren zur Kontrolle des Zugangs nach Anspruch 1, **dadurch gekennzeichnet, dass** das Herunterzählen des Werts des Fehlerzählers (CE) gemäß einer vorbestimmten Regel erfolgt.

11. Verfahren zur Kontrolle des Zugangs nach den Ansprüchen 9 und 10, **dadurch gekennzeichnet, dass** die vorbestimmte Regel zum Hochzählen des Werts des Fehlerzählers (CE) und die Regel für das Herunterzählen dieses Fehlerzählers (CE) voneinander verschieden sind.

12. Verfahren zur Kontrolle des Zugangs nach Anspruch 11, **dadurch gekennzeichnet, dass** das Hochzählen des Werts des Fehlerzählers (CE) schneller als das Herunterzählen ist.

13. Verfahren zur Kontrolle des Zugangs nach Anspruch 1, **dadurch gekennzeichnet, dass** bei einem Reinitialisieren des Sicherheitsmoduls das Verfahren außerdem die folgenden Schritte aufweist:
- Feststellen eines Datums, das dem letzten von der Multimediaeinheit empfangenen Datum entspricht,
- Feststellen des Empfangsdatums einer neuen Kontrollnachricht (ECM),
- Berechnen der Differenz zwischen diesen beiden Daten,
- Hochzählen des Werts des Fehlerzählers (CE), wenn diese Differenz kleiner als eine vorbestimmte Latenzzeit ist.

14. Verfahren zur Kontrolle des Zugangs nach Anspruch 13, **dadurch gekennzeichnet, dass** der Fehlerzähler (CE) reinitialisiert wird, wenn die Differenz zwischen den beiden Daten größer als eine vorbestimmte Inaktivitätszeit ist.

15. Vorrichtung zur Kontrolle des Zugangs zu durch Kontrollwörter (CW) verschlüsselten Daten, wobei diese Kontrollwörter durch ein Sicherheitsmodul in Kontrollnachrichten (ECM) empfangen und an eine Auswerteeinheit (STB) der verschlüsselten Daten zurückgesendet werden, wobei die Vorrichtung aufweist:
- Mittel zum Empfang einer ersten Kontrollnachricht (ECM1) mit wenigstens einem Kontrollwort (CW),
- Mittel zum Empfang einer auf die erste Kontrollnachricht (ECM1) folgenden zweiten Kontrollnachricht (ECM2), wobei die zweite Nachricht wenigstens ein Kontrollwort (CW) aufweist,
- Mittel zum Feststellen einer Zeitdauer, die die zwei aufeinander folgenden Kontrollnachrichten (ECM1, ECM2) trennt,
- Mittel zum Hochzählen eines Fehlerzählers (CE), wenn diese Zeitdauer kürzer als die vorbestimmte Zeitdauer (CP) ist,
- Mittel zum Herunterzählen des Fehlerzählers (CE), wenn diese Zeitdauer gleich der vorbestimmten Zeitdauer oder länger als diese ist,
- und Mittel zum Zurücksenden des Kontrollworts (CW) an die Auswerteeinheit (STB) nach einer Wartezeit, die von dem Wert des Fehlerzählers (CE) abhängt.
